# EUROPÄISCHE PATENTSCHRIFT

(11) **EP 2 022 950 B1**
(45) Veröffentlichungstag und Bekanntmachung des Hinweises auf die Patenterteilung: **09.03.2016**
(21) Anmeldenummer: 07014719.4
(22) Anmeldetag: 26.07.2007
(51) Int. Cl.: F02C 7/06, F16C 32/04, H01F 7/20, F01D 25/16

(54) **Strömungs-oder Verdrängungsmaschine**
Turbo or displacement engine
Turbomachine ou machine de refoulement

(43) Veröffentlichungstag der Anmeldung: 11.02.2009
(73) Patentinhaber: Siemens Aktiengesellschaft, 80333 München (DE)
(72) Erfinder: Haje, Detlef, Dr., 02828 Görlitz (DE)

(56) Entgegenhaltungen:
- EP-A1- 0 580 201
- EP-B1- 0 655 108
- WO-A-99/42731
- DE-A1- 4 444 587
- US-A- 4 683 111
- US-A- 5 698 917
- US-B1- 6 302 661

## Beschreibung

Die Erfindung betrifft eine Strömungs- oder Verdrängungsmaschine, insbesondere eine Dampfturbine mit Magnetlagern gemäß dem Oberbegriff des Anspruches 1.

Aus der Lagerungstechnik ist bekannt, Rotoren von Strömungs- oder Verdrängungsmaschinen mit Hilfe von Magnetanordnungen in radialer und axialer Richtung zu lagern (Magnetlager). Dabei wird mit Hilfe einer Lageregelungs-Einrichtung die Position des Rotors über Positionssensoren fortwährend gemessen und einer etwaigen außermittigen Lage durch schnelle Anpassung der Magnetfelder entgegengewirkt. Diese Lagerungen sind bereits bei Rotorgewichten von mehreren Tonnen erfolgreich auch bei Strömungsmaschinen, wie Speisewasserpumpe oder Verdichtern eingesetzt worden. Dabei werden die Magnetlager anstelle der üblichen Lager außerhalb des Strömungsraumes, ähnlich wie so genannte Stehlager eingesetzt.

Ein Einsatz von Magnetlagern bei Dampfturbinen ist aus der Praxis noch nicht bekannt, wohl aber z. B. in der EP 655 108 B1 prinzipiell beschrieben. Hierin wird allerdings nicht in ausreichendem Maße auf die Machbarkeit einer Ausführung der Magnetlager im Dampfraum eingegangen, so dass eine technische Lösung noch nicht vorliegt. Damit wird ein wesentlicher Vorteil von Magnetlagern noch nicht ausgeschöpft, welcher mit Anordnung der Magnetlager im Dampfraum die Möglichkeit bietet, die aktive Rotorlänge gegenüber dem Stand der Technik weiter zu verlängern. Die Baulänge von Turbinen oder Teilturbinen ist unter anderem durch das dynamische Verhalten des Rotors und damit durch den Lagerabstand bestimmt. Aus Gründen der Thermodynamik und des Wirkungsgrades oder der Gestaltung der Expansionsaufgabe, wie geregelte Dampfentnahmen wäre eine höhere Baulänge allerdings in vielen Fällen gewünscht.

US 5,698,917 A offenbart eine elektromagnetische Lagerung zur Lagerung eines Motors mit einem Stator. Der Stator weist Polelemente auf. In den Polelementen sind elektromagnetische Spulen in Spulenöffnungen angeordnet. Die Spulenöffnungen sind mit einem Brückenelement geschlossen.

EP 0 580 201 A1 offenbart eine magnetische Notfalllagerung. In entsprechende Kammern innerhalb eines Stators sind elektromagnetische Spulen angeordnet und die Kammern sind mit Brückenelementen geschlossen. Die Kammern werden dabei nicht hermetisch abgeschlossen sondern einerseits mit einer Öffnung des Brückenelements und/oder mit einem Kanal offen gelassen. Somit kann beispielsweise Wärme der Elektromagneten abgeführt werden.

Der Erfindung liegt die Aufgabe zugrunde, die Baulänge der gattungsgemäßen Strömungsmaschine durch eine Gestaltung der Magnetlager zu erhöhen.

Die Aufgabe wird bei einer gattungsgemäßen Strömungs- oder Verdrängungsmaschine erfindungsgemäß durch die kennzeichnenden Merkmale des Anspruches 1 gelöst. Vorteilhafte Ausgestaltungen der Erfindung sind Gegenstand der Unteransprüche.

Das Vorteil der erfindungsgemäßen Lösung liegt darin, einen betriebssicheren Einsatz von Magnetlagern im Strömungsraum von Strömungsmaschinen zu erreichen und den Nutzen der Magnetlagertechnik für eine große Anwendungsbreite in der Strömungsmaschinentechnik zu erschließen. Am Beispiel von Dampfturbinen kann dies eine nahezu unbegrenzte Baulänge von Dampfturbinen-Rotoren unterstützen und die Längen-zu-Durchmesser-Beschränkungen bisheriger Rotoren eliminieren. Dadurch können wesentliche Vorteile in Wirkungsgrad, Flexibilität, Kosten, Baugröße etc. erreicht werden.

Ein Ausführungsbeispiel der Erfindung ist in der Zeichnung dargestellt und wird im folgenden näher erläutert. Es zeigen:
- Fig. 1: ein Längsschnitt durch eine Dampfturbine mit einem Expansionsabschnitt;
- Fig. 2: ein Querschnitt durch ein Magnetlager;
- Fig. 3: bis 6 verschiedene Ausführungsformen eines Magnetlagers und
- Fig.7: ein Prinzipschaltbild einer Dampfturbine mit drei Expansionsabschnitten.

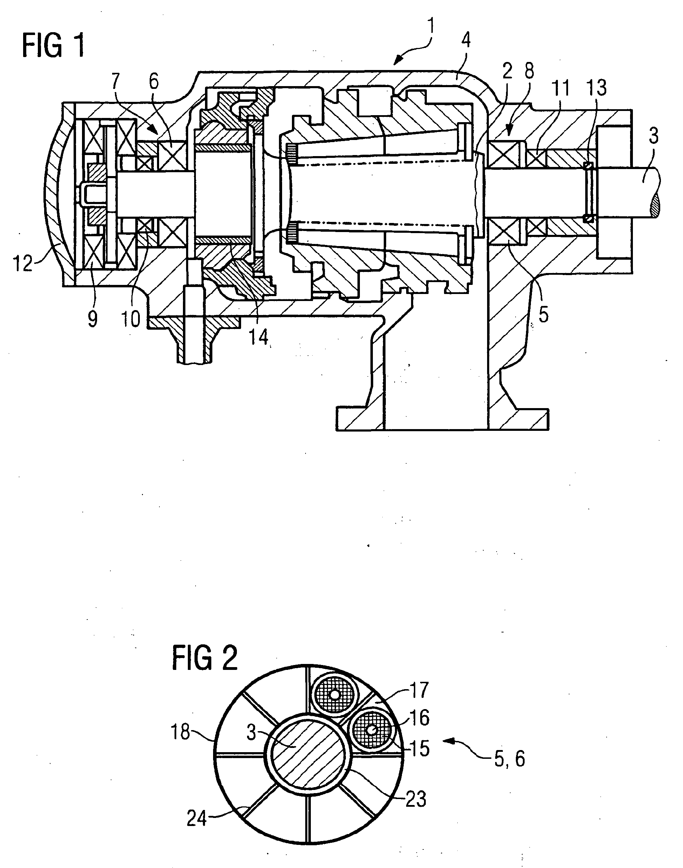

In der Fig. 1 ist als ein Ausführungsbeispiel für eine Strömungsmaschine eine Dampfturbine mit einem Expansionsabschnitt gezeigt. Das nachfolgend beschriebene Ausführungsbeispiel anhand einer Dampfturbine ist auch auf andere Strömungsmaschinen und auf Verdrängungsmaschinen anwendbar.

Die Dampfturbine 1 umfasst einen drehbar gelagerten Turbinenrotor 2 einschließlich Wellenabschnitte 3 mit Lagerstellen und ein feststehendes Turbinengehäuse 4. Der Turbinenrotor ist an den jeweiligen Wellenabschnitten 3 in zwei radialen Magnetlagern 5 und 6 gelagert. Dabei ist das Magnetlager 6 auf der Hochdruckseite 7 und das Magnetlager 5 auf der Abdampfseite 8 der Dampfturbine 1 angeordnet. Bei der Dampfturbine 1 gemäß Fig. 1 ist der Wellenabschnitt 3 des Turbinenrotors 2 auf der Abdampfseite 8 durch das Turbinengehäuse 4 hindurchgeführt.

Auf der Hochdruckseite 7 ist ein magnetisches Axiallager 9 angeordnet, das über den Wellenabschnitt 3 den Turbinenrotor 2 in axialer Richtung hält. Dabei nimmt das magnetische Axiallager 9 die vom Dampf erzeugten und auf den Turbinenrotor 2 wirkenden Schubkräfte auf.

Auf der Hochdruckseite 7 ist außerdem ein Fanglager 10 vorgesehen, das im Ausführungsbeispiel zwischen dem radialen Magnetlager 6 und dem axialen Magnetlager 9 angeordnet ist. Ein weiteres Fanglager 11 ist auf der Abdampfseite 8 in Strömungsrichtung des Dampfes hinter dem radialen Magnetlager 5 angeordnet. Bei einem Ausfall der radialen Magnetlager 5 und 6 kann der Turbinenrotor 2 mit seinen Wellenabschnitten 3 in den Fanglagern 10 und 11 auslaufen.

Das Turbinengehäuse 4 ist auf der Hochdruckseite 7 mit einem am Turbinengehäuse 4 befestigten Deckel 12 dampfdicht verschlossen, so dass dort eine Verbindung zum Außenraum nicht mehr vorhanden ist. Auf der Abdampfseite 8 des Turbinengehäuses 4 ist eine berührungsfreie Wellendichtung 13 hinter dem Magnetlager 5 und dem Fanglager 11 in Strömungsrichtung wie durch einen Pfeil angedeutet auf dem Wellenabschnitt 3 des Turbinenrotors 2 angeordnet. Auf der Hochdruckseite 7 des Turbinengehäuses 4 ist eine Labyrinthdichtung 14 hinter dem Magnetlager 6 in Strömungsrichtung des angedeuteten Pfeils vorgesehen.

Somit ist die Wellendichtung 13 auf der dem Inneren des Turbinengehäuses 4 abgewandten Seite des radialen Magnetlagers 5 angeordnet, während die Labyrinthdichtung 14 auf der dem Inneren des Turbinengehäuses 4 zugewandten Seite des radialen Magnetlagers 6 angebracht ist. Das Turbinengehäuse 4 umschließt damit den Turbinenrotor 2 mit den Wellenabschnitten 3 über einen Teil seiner Länge sowie die Magnetlager 5, 6, 9, die Fanglager 10, 11 und die Abdichtungen 13, 14.

Im Inneren des Turbinengehäuses 4 ist somit ein Strömungsraum gebildet, in dem die Magnetlager 5, 6, 9 angeordnet sind. Als Strömungsraum wird dabei der gesamte vom Strömungsmedium gefüllte und dem Umgebungsmedium im Normalbetrieb nicht zugängliche Raum angesehen. Die Ausführung ist ebenso geeignet für Anwendungen, in denen die Lager zu einem Teil von Umgebungsmedium und zu einem anderen Teil von Strömungsmedium umgeben sind.

Wie in Fig. 2 gezeigt, besteht jedes der radialen Magnetlager 5, 6 aus mehreren Elektromagneten mit den Wicklungen 15, den Wicklungskernen 16 und den Polen 17 im Gehäuse 18. Die Elektromagneten sind an der Rotorlagerstelle rund um den Wellenabschnitt 3 angeordnet. Die um den Wellenabschnitt 3 angeordneten Elektromagneten der Magnetlager 5,6 bilden jeweils radiale Ringspalte 23 zwischen dem Wellenabschnitt 3 und den jeweiligen Elektromagneten sowie tangentiale Spalte 24 zwischen den einzelnen Elektromagneten selbst.

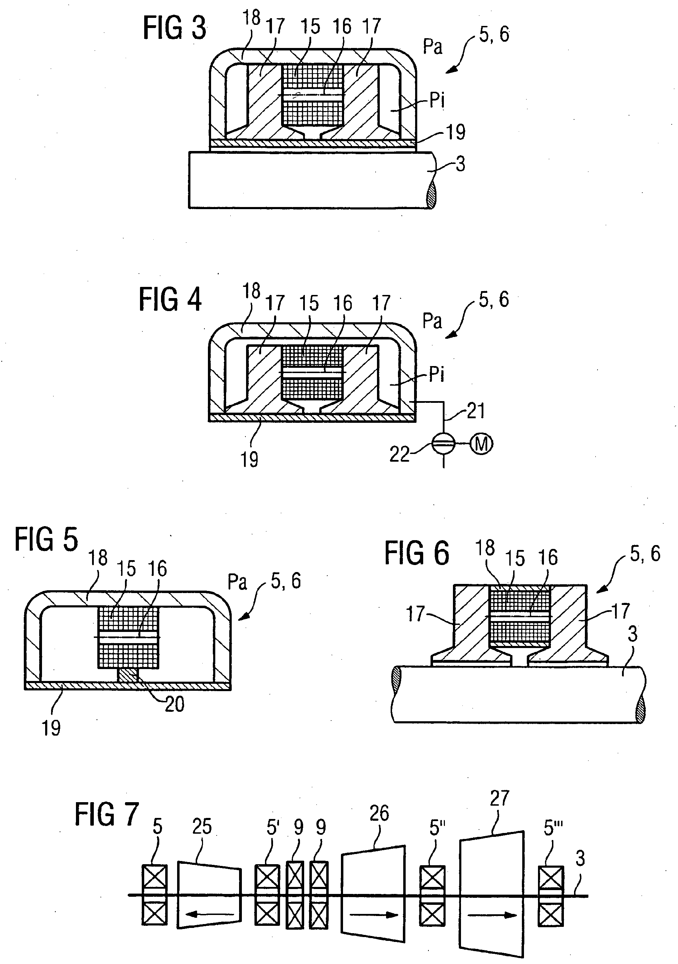

Wie in den Fig. 3 bis 6 beispielhaft dargestellt, enthält jeder Elektromagnet eine Wicklung 15, die aus von einem Isolator umgebenen Leitern besteht und die einen Wicklungskern 16 umschließt. An den Wicklungskern 16 schließen sich Pole 17 an.

Alternativ können die Pole 17 auch durch den Wicklungskern 16 gebildet werden. Dabei ist als Pol angesehen: Der Lagerstelle gegenüberstehendes, einen magnetischen Fluss an der Lagerstelle abgebendes Formelement.

Aus der vorgesehenen Anordnung der Magnetlager 5, 6 innerhalb des Strömungsraumes der Strömungs- oder Verdrängungsmaschine, wie der dargestellten Dampfturbine 1, ergeben sich hinsichtlich der Umgebungstemperatur, des Strömungsmediums und des Umgebungsdruckes die folgenden wesentlichen Anforderungen.

Hinsichtlich der Umgebungstemperatur sind die Magnetlager 5, 6 von einem Strömungsmedium mit einer weitgehend vorgegebenen Temperatur umgeben. Die Temperatur kann bei thermischen Strömungsmaschinen beispielsweise einige hundert Grad Celsius erreichen. Eine Kühlung der Magnetlager 5, 6 hinunter auf eine Anwendbarkeit üblicher Kunststoffisolierungen wäre mit großem apparativen Aufwand verbunden und erfordert einen kontinuierlichen Energieeinsatz durch Lüfterantriebe, Pumpen oder ähnliche Maschinen.

In Hinblick auf das Strömungsmedium kann das Umgebungsmedium je nach Art der Strömungsmaschine korrosiv oder abtragend wirken. Das Strömungsmedium könnte bei einem direkten Kontakt mit den Magnetlagern 5, 6 eine Schädigung oder Zerstörung bewirken. Wasserdampf als Strömungsmedium oder enthaltene Feuchtigkeit im Strömungsmedium kann durch Eindringen in die Wicklungen 15 der Magnetlager 5,6 aufgrund der Leitfähigkeit von Wasser die Wirkung des Isolationsmittels der Wicklungen beeinträchtigen.

Hinsichtlich des Umgebungsdrucks wird der Druck des Strömungsmediums vom jeweiligen Betriebspunkt der Strömungsmaschine bestimmt und schwankt beispielsweise zwischen Umgebungsdruck und einem Druck bei maximalem Energieumsatz. Eine einem solchen Druck ausgesetzte Wicklung 15 würde innerhalb weniger Belastungs- oder Entlastungszyklen der Strömungsmaschine von Strömungsmedium durchtränkt und potenziell in ihrer Wirkung beeinträchtigt. Schnelle Druckänderungen könnten zu einer Druckdifferenz zwischen der Wicklung 15 und dem Strömungsraum führen und eine mechanische Überlastung der Wicklung 15 bewirken.

Für den Einsatz der Magnetlager 5, 6 unter erhöhten Anwendungstemperaturen werden für die Elektromagneten vorzugsweise hochtemperaturbeständige Elektrowerkstoffe eingesetzt.

Als Isolationsmittel für die Elektrowerkstoffe werden beispielsweise Hochtemperaturkunststoffe, Glasseidegeflecht, Glimmerbandierung, Keramikfasergeflecht und als Leiterwerkstoff beispielsweise Kupfer, Kupfer vernickelt, Reinnickel oder Speziallegierungen verwendet. Für hohe Temperaturen wird die Isolation zwischen einzelnen Windungen der Wicklungen 15 durch keramische Gewebe oder Umspinnungen aus Gewebe gewährleistet, so dass die Umgebungstemperaturen, die im Strömungsraum einer Strömungsmaschine und durch Erwärmung der Magnetlager 5, 6 auftreten, sicher ertragen werden können.

Bei einer solchen Ausführung wird der Aufwand für Kühlung der Magnetlager 5, 6 und Wärmeabfuhr aus den Magnetlagern 5, 6 minimiert. Weiterhin kann bei einer solchen Ausführung die Kühlung sogar ohne externe Kühlmittelzuführung erfolgen. Derartige Isolationsmittel sind aus dem Elektromaschinenbau bekannt, beispielsweise von Belüftungsanlagen für Straßentunnel. Allerdings sind derartige Isolationsmittel in der Regel nicht für Feuchtigkeits- oder Fremdmedieneinwirkung geeignet.

Um einen sicheren Betrieb der Magnetlager 5, 6 innerhalb des Strömungsraumes des Turbinengehäuses 4 zu gewährleisten, ist zumindest die Wicklung 15 der Elektromagneten von dem Strömungsmedium hermetisch getrennt. Hierzu sind in den Fig. 3 bis 6 mehrere Ausführungsbeispiele angegeben.

Gemäß den Fig. 3 und 4 ist das gesamte Magnetlager 5, 6 oder jeder einzelne Elektromagnet des Magnetlagers 5, 6 mit Wicklung 15 und Wicklungskern 16 sowie beiden Polen 17 in einem Gehäuse 18 untergebracht. Das Gehäuse 18 steht unter einem Innendruck Pi und einem äußeren Druck Pa und ist mit einer zugehörigen Abschlussvorrichtung 19 auf der Seite verschlossen, die dem Wellenabschnitt 3 mit der Rotorlagerstelle zugewandt ist. Hierbei ist wesentlich, dass der magnetische Fluss die Rotorlagerstelle trotz der Abschlussvorrichtung 19 des Gehäuses 18 erreichen kann. Dazu kann die Abschlussvorrichtung 19 des Gehäuses 18 durch ein magnetisch durchlässiges Material, z. B. austenitischer Stahl gebildet werden.

Bei der in Fig. 6 dargestellten Ausführungsform ist lediglich die Wicklung 15 mit dem Wicklungskern 16 von einem Gehäuse 18 umschlossen, das zwischen den beiden Pole 17 des Elektromagneten angeordnet ist. Die beiden Pole 17 liegen außerhalb des Gehäuses 18 und stehen dem Wellenabschnitt 3 mit der Rotorlagerstelle direkt gegenüber.

Das gesamte Gehäuse 18 ist druckfest ausgebildet (Fig. 3, 4, 5). Es kann damit der Differenz zwischen dem äußeren Druck Pa des Strömungsmediums und dem sich einstellenden inneren Druck Pi im Inneren des Gehäuses 18 standhalten.

Das Gehäuse 18 kann auch gemäß Fig. 5 durch innenliegende, drucktragende, nichtmagnetische Komponenten 20 der Magnetlager 5, 6 so gestützt werden, dass es die Kräfte aus der Druckdifferenz auf diese Komponenten übertragen kann, beispielsweise auf eine das Gehäuse 18 mit Abschlussvorrichtung 19 vollständig ausfüllende Anordnung der Wicklung 15 mit Wicklungskern 16.

Schließlich kann wie in Fig. 4 dargestellt an das Gehäuse 18 vorteilhafterweise eine Zuleitung 21 angeschlossen sein, über die mit Hilfe eines Verdichters 22 ein Druckmedium in das Gehäuse 18 eingebracht wird. Der Druck des Druckmediums kann gleich groß oder geringer sein als der Druck des Strömungsmediums, so dass der Differenzdruck über dem Gehäuse 18 reduziert oder aufgehoben wird.

In der Fig. 7 ist eine Dampfturbine mit drei Expansionsabschnitten im Blockschaltbild dargestellt, die einen Turbinenrotor 25 für Hochdruck-Expansion, einen Turbinenrotor 26 für Mitteldruck-Expansion und einen Turbinenrotor 27 für Niederdruck-Expansion zeigt. Die Rotoren 25, 26, 27 sind jeweils mit Wellenabschnitten 3 an Lagerstellen in radialen Magnetlagern 5, 5', 5'', 5''' gelagert. Weiterhin sind axiale Magnetlager 9 zwischen dem Turbinenrotor 25 der Hochdruckstufe und dem Turbinenrotor 26 der Mitteldruckstufe angeordnet, und zwar vor dem radialen Magnetlager 5' in Strömungsrichtung des Turbinenrotors 26 für Mitteldruck-Expansion gesehen. Die jeweilige Strömungsrichtung ist wiederum durch einen Pfeil angedeutet.

## Patentansprüche

1. Strömungs- oder Verdrängungsmaschine, insbesondere Dampfturbine (1), mit einem von einem Strömungsmedium durchströmten Strömungsraum, in dem ein Rotor (2) einschließlich Wellenabschnitte (3) mit Rotorlagerstellen umläuft, der in Magnetlagern (5, 6) gelagert ist, wobei jedes Magnetlager (5, 6) mehrere Elektromagnete aufweist, die aus einer Wicklung (15), einem Wicklungskern (16) und mindestens einem Pol (17) bestehen, wobei
die Magnetlager (5, 6) innerhalb des Strömungsraumes angeordnet sind, und
zumindest die Wicklung (15) jedes Elektromagneten der Magnetlager (5, 6) hermetisch von dem Strömungsmedium getrennt in einem Gehäuse (18) untergebracht ist, und **dadurch gekennzeichnet, dass** an das Gehäuse (18) eine Zuleitung (21) angeschlossen ist, über die mit Hilfe eines Verdichters (22) ein Druckmedium in das Gehäuse (18) einbringbar ist, so dass das Gehäuse (18) mit einem Druckmedium beaufschlagbar ist, dessen Druck höchstens dem maximalen Druck des Strömungsmediums entspricht.

2. Strömungsmaschine nach Anspruch 1, **dadurch gekennzeichnet, dass** der gesamte Elektromagnet einschließlich der Wicklung (15), des Wicklungskernes (16) und der Pole (17) von dem Gehäuse (18) umschlossen ist und dass eine Abschlussvorrichtung (19) des Gehäuses (18) auf der der Rotorlagerstelle der Wellenabschnitte (3) zugewandten Seite aus einem magnetisch durchlässigen Werkstoff gefertigt ist.

3. Strömungsmaschine nach Anspruch 1, **dadurch gekennzeichnet, dass** die Pole (17) des Elektromagneten außerhalb des Gehäuses (18) liegen.

4. Strömungsmaschine nach einem der Ansprüche 1 bis 3, **dadurch gekennzeichnet, dass** das Gehäuse (18) druckfest gegenüber dem maximalen Druck des Strömungsmediums ausgelegt ist.

5. Strömungsmaschine nach Anspruch 1, **dadurch gekennzeichnet, dass** die Elektromagnete eine Wicklung (15) und einen Wicklungskern (16) mit mindestens einem integrierten Pol (17) aufweisen.

## Claims

1. Turbo- or displacement machine, in particular a steam turbine (1), having a flow space through which a flow medium flows and in which there rotates a rotor (2), including shaft sections (3) with rotor bearing points, that is mounted in magnetic bearings (5, 6), wherein each magnetic bearing (5, 6) has multiple electromagnets that consist of a winding (15), a winding core (16) and at least one pole (17), wherein
the magnetic bearings (5, 6) are arranged within the flow space, and
at least the winding (15) of each electromagnet of the magnetic bearings (5, 6) is installed in a housing (18) and hermetically separated from the flow medium, and
**characterized**
**in that** a supply line (21), via which a pressurized medium can be introduced into the housing (18) with the aid of a compressor (22), is connected to the housing (18) such that the housing (18) can be charged with a pressurized medium whose pressure corresponds at most to the maximum pressure of the flow medium.

2. Turbomachine according to Claim 1, **characterized in that** the entire electromagnet, including the winding (15), the winding core (16) and the poles (17), is enclosed by the housing (18) and **in that** a closure device (19) of the housing (18) is made of a magnetically permeable material on that side oriented towards the rotor bearing point of the shaft sections (3).

3. Turbomachine according to Claim 1, **characterized in that** the poles (17) of the electromagnet are located outside the housing (18).

4. Turbomachine according to one of Claims 1 to 3, **characterized in that** the housing (18) is designed to withstand the maximum pressure of the flow medium.

5. Turbomachine according to Claim 1, **characterized in that** the electromagnets have a winding (15) and a winding core (16) with at least one integrated pole (17).

## Revendications

1. Turbomachine ou machine de refoulement, en particulier une turbine à vapeur (1), avec un espace d'écoulement traversé par un milieu d'écoulement, dans lequel un rotor (2) inclut en les entourant des sections ondulées (3) avec des points d'appui de rotor, qui est monté dans des paliers magnétiques (5, 6), dans laquelle chaque palier magnétique (5, 6) présente plusieurs électroaimants qui sont composés d'un enroulement (15), d'un noyau d'enroulement (16) et d'au moins un pôle (17), dans laquelle
les paliers magnétiques (5, 6) sont disposés à l'intérieur de l'espace d'écoulement et
au moins l'enroulement (15) de chaque électroaimant des paliers magnétiques (5, 6) est séparé hermétiquement du milieu d'écoulement et logé dans un carter (18), et **caractérisée en ce que**,
au niveau du carter (18) est raccordé un tuyau d'alimentation (21), par le biais duquel à l'aide d'un compresseur (22) un milieu de pression peut être amené dans le carter (18), de sorte que le carter (18) peut être alimenté en milieu de pression, dont la pression correspond tout au plus à la pression maximale du milieu d'écoulement.

2. Turbomachine selon la revendication 1, **caractérisée en ce que** l'électroaimant dans sa totalité, y compris l'enroulement (15), le noyau d'enroulement (16) et les pôles (17), est entouré par le carter (18) et **en ce qu'**un dispositif de fermeture (19) du carter (18) est prévu sur le côté tourné vers le point d'appui de rotor des sections ondulées (3) à partir d'une matière magnétiquement perméable.

3. Turbomachine selon la revendication 1, **caractérisée en ce que** les pôles (17) de l'électroaimant se trouvent à l'extérieur du carter (18).

4. Turbomachine selon l'une des revendications 1 à 3, **caractérisée en ce que** le carter (18) est conçu de manière à résister à la pression par rapport à la pression maximale du milieu d'écoulement.

5. Turbomachine selon la revendication 1, **caractérisée en ce que** les électroaimants présentent un enroulement (15) et un noyau d'enroulement (16) avec au moins un pôle (17) intégré.
